# FASCICULE DE BREVET EUROPEEN

(11) **EP 0 614 957 B1**
(45) Date de publication et mention de la délivrance du brevet: **17.09.1997**
(21) Numéro de dépôt: 94400476.1
(22) Date de dépôt: 07.03.1994
(51) Int. Cl.: C09D 183/06, C08J 7/04, C08K 5/00

(54) **Compositions de revêtement antiabrasion à base d'hydrolysats de silanes et de composés de l'alumium, et articles revêtus correspondants résistant à l'abrasion et aux chocs**
Abriebfeste Beschichtungszusammensetzungen auf Basis von hydrolysierten Silanen und Aluminiumverbindungen; abriebfeste und schlagzähe Gegenstände
Abrasion-resistant coating compositions containing hydrolised silanes and aluminium compounds; coated articles resistant to abrasion and shocks

(30) Priorité: 08.03.1993 FR 9302649
(43) Date de publication de la demande: 14.09.1994
(73) Titulaire: ESSILOR INTERNATIONAL Compagnie Générale d'Optique, F-94220 Charenton le Pont (FR)
(72) Inventeur: Vaneeckhoutte, Philippe, F-77100 Meaux (FR); Leclaire, Yves, F-77380 Combs-la-Ville (FR); Robert, Anne, F-94000 Créteil (FR)
(74) Mandataire: Casalonga, Axel

(56) Documents cités:
- EP-A- 0 035 609
- FR-A- 2 383 220
- FR-A- 2 663 036
- US-A- 4 355 135
- DATABASE WPI Derwent Publications Ltd., London, GB; AN 92-101607 & JP-A-4 045 129 (DAIHACHI KAGAKU KOG KK.) 14 Février 1992

## Description

La présente invention se rapporte au domaine des compositions polysiloxanes thermodurcissables, plus particulièrement celles obtenues par hydrolyse et prépolymérisation d'alkoxysilanes organo-fonctionnels et qui sont susceptibles d'être utilisées pour revêtir et protéger contre l'abrasion des articles en matériau organique, en particulier des lentilles ophtalmiques.

Les lentilles ophtalmiques en matériau organique transparent, ou verre organique, plus léger que le verre minéral, sont maintenant d'un usage très répandu.
Les verres organiques présentent cependant l'inconvénient d'être plus sensibles à la rayure et à l'abrasion que ne le sont les verres minéraux classiques.

Il est donc usuel de protéger les verres organiques par application sur leur surface d'une composition durcissable par voie thermique ou photochimique conduisant à un revêtement anti-abrasion.

Une technique connue pour former des revêtements anti-abrasion consiste à polymériser des alkoxysilanes en présence de dérivés de l'aluminium.

A titre d'exemple de brevet portant sur cette technique, on peut citer le brevet US 4 211 823, décrivant des compositions renfermant :
- un hydrolysat d'un silane possédant un groupement époxy et pas moins de deux groupements alkoxy directement liés à l'atome de silicium,
- de fines particules de silice,
- certains chélates d'aluminium,
dans un milieu solvant renfermant plus de 1 % en poids d'eau, et qui sont utilisés pour revêtir des substrats en matière plastique.

Les revêtements obtenus à partir de ces compositions présentent l'inconvénient de fragiliser au niveau mécanique, et plus particulièrement au niveau du choc multidirectionnel, le substrat sur lequel ils sont appliqués.

En outre, ces revêtements ont une résistance à l'abrasion et à la rayure qui décroit de façon très importante lorqu'ils sont associés à un revêtement anti-reflets, constituée d'un dépôt de matériaux diélectriques et plus particulièrement d'oxydes métalliques, sur la surface du revêtement anti-abrasion.

La présente invention a pour but de fournir une composition polysiloxane thermodurcissable, renfermant des composés de l'aluminium, pour l'obtention de revêtements résistants à l'abrasion, même lorsque ceux-ci sont associés à une couche anti-reflets, et qui ne fragilisent pas, où à un degré moindre que les revêtements de l'art antérieur, le substrat sur lequel ils sont appliqués.

La présente invention a encore pour but de fournir une composition stable dans le temps, conduisant, par durcissement, à un revêtement qui, outre les propriétés ci-dessus, possède également la transparence requise pour l'application au domaine optique, une bonne adhérence aux substrats en matériau organique, avec absence de craquelures et de préférence une bonne aptitude à la coloration.

Les compositions selon l'invention sont des compositions durcissables pour revêtement anti-abrasion comprenant les constituants suivants :
A- Un hydrolysat d'un silane comportant un groupement époxy et trois groupements alkoxy, ces derniers étant directement liés à l'atome de silicium,
B - Un hydrolysat d'un silane de formule (I) 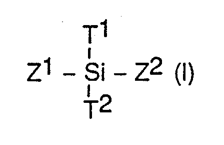 dans laquelle T¹ et T² sont des groupements qui, par traitement hydrolytique du silane de formule (I), conduisent chacun à un groupement OH,
   Z¹ et Z² sont des groupements organiques liés à l'atome de silicium par une liaison Si-C et qui ne comportent pas de groupement susceptible de réagir avec les silanes hydrolysés présents dans la composition,
C - De la silice colloïdale,
D - Un composé de l'aluminium choisi parmi
   - les chélates d'aluminium
   - les composés de formule (III) ou (IV)

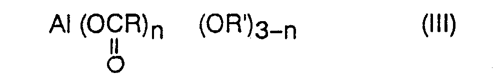

      (R'O)₃₋ₙ Al (O Si R''₃)ₙ (IV)

      dans lesquelles
      R et R' sont des groupements alkyles à chaîne linéaire ou ramifiée de 1 à 10 atomes de carbone,
      R'' est un groupement alkyle à chaîne linéaire ou ramifiée de 1 à 10 atomes de carbone, un groupement phényle, un groupement 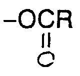 où R a la signification indiquée ci-dessus,
      et n est un nombre entier de 1 à 3,
Lorsque le composé de l'aluminium est un chélate d'aluminium, la composition comporte, de préférence, E - un solvant organique dont le point d'ébullition T, à pression atmosphérique est compris entre 70 et 140°C.

Le constituant A de la composition est préférentiellement un hydrolysat d'un époxysilane répondant à la formule (V) 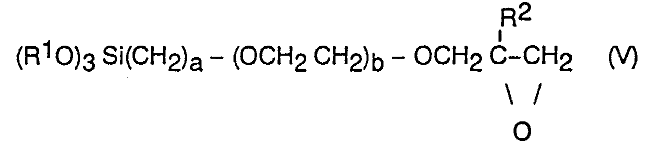 dans laquelle
R¹ est un groupement alkyle de 1 à 6 atomes de carbone, préférentiellement un groupement méthyle ou éthyle,
R² est un groupement méthyle ou un atome d'hydrogène,
a est un nombre entier de 1 à 6,
b représente 0,1 ou 2.
Des exemples de tels époxysilanes sont le γ - glycidoxypropyltriméthoxysilane ou le γ -glycidoxypropyl triéthoxysilane. On utilise préférentiellement le γ -glycidoxypropyl triméthoxysilane.

En ce qui concerne le constituant B, il a été constaté que celui-ci, utilisé en combinaison avec le constituant A, permet de diminuer la rigidité du revêtement final obtenu et d'accroitre la résistance aux chocs du verre revêtu correspondant, tout en préservant de bonnes qualités de résistance à l'abrasion.

Pour l'obtention du constituant B, le silane de formule (I) utilisé comporte deux groupements T¹ et T², engagés dans une liaison avec le silicium et qui, par traitement hydrolytique du dit silane, conduisent chacun à un groupement hydroxy, de sorte que le silane de formule (I) hydrolysé est un disilanol.

T¹ et T² sont choisis indépendamment l'un de l'autre parmi, par exemple, les atomes de chlore, d'hydrogène, des groupements acyloxy ou préférentiellement, des groupements alkoxy de 1 à 10 atomes de carbone.

Les groupements Z¹ et Z² du silane de formule (I), de préférence, ne comportent pas de groupement susceptible de réagir avec les silanes hydrolysés présents dans la composition, tels que des groupements SiOH ou des groupements pontants tels que des groupements époxy. Z¹ et Z² sont choisis préférentiellement et indépendamment l'un de l'autre parmi les groupements alkyles de 1 à 10 atomes de carbone ou les groupements aryle, de 6 à 10 atomes de carbone tels que le groupement phényle.
Des exemples de silanes de formule (I) sont le diméthyldiméthoxysilane, le diméthyldiéthoxysilane, le méthylphényldiméthoxysilane.
Les hydrolysats des silanes sont préparés de façon connue en soi. Les techniques exposées dans le brevet US 4 211 823 peuvent être utilisées. On peut, par exemple, mélanger les silanes et effectuer ensuite l'hydrolyse du mélange.

On préfère en outre utiliser pour l'hydrolyse une quantité d'eau stoechiométrique, c'est à dire une quantité molaire en eau correspondant au nombre de moles de fonctions susceptibles d'engendrer des silanols (par exemple Si O Alkyle, Si Cl, Si H).

Le constituant C de la composition est de la silice colloïdale, c'est à dire de fines particules de silice dont le diamètre est, de préférence, inférieur à 50 mµ en dispersion dans un solvant, préférentiellement alcoolique.

Un exemple d'une telle silice colloïdale est la silice Nissan Sun Colloid Mast qui renferme 30 % de matière solide SiO₂ en suspension dans le méthanol.

Le constituant D est un composé de l'aluminium, qui joue le rôle de catalyseur de durcissement de la composition.
Il est choisi parmi les chélates d'aluminium ou les composés de formules (III) ou (IV) détaillées précédemment.

Un chélate d'aluminium est un composé formé en faisant réagir un alcoolate ou un acylate d'aluminium avec des agents séquestrants exempts d'azote et de soufre, contenant de l'oxygène comme atome de coordination.

Le chélate d'aluminium est de préférence choisi parmi les composés de formule (II)

(II) Al Xᵥ Y₃₋ᵥ

dans laquelle X est un groupement OL où L est un groupement alkyle de 1 à 10 atomes de carbone,
Y est au moins un coordinat produit à partir d'un composé de formule (1) ou (2)

(1) M¹ CO CH₂ COM²

(2) M³ CO CH₂ COOM⁴

dans lesquelles
M¹, M², M³ et M⁴ sont des groupements alkyles de 1 à 10 atomes de carbone
et v prend les valeurs 0,1 ou 2.

Comme exemples de composés de formule (II), on peut citer l'acétylacétonate d'aluminium, l'éthylacétoacétate bisacétylacétonate d'aluminium, le biséthylacétoacétate acétylacétonate d'aluminium, le di-n-butoxide monoethylacétoacétate d'aluminium, le diipropoxyde monomethylacétoacétate d'aluminium.

Comme composés de formule (III) ou (IV), on choisit préférentiellement ceux pour lesquels R' est un groupement isopropyle ou éthyle, R et R'' sont des groupements méthyles.

On peut utiliser comme constituant D un ou plusieurs des composés de formule (II), (III) ou (IV).

Le constituant D est utilisé dans des proportions permettant d'obtenir le durcissement des compositions selon l'invention, en une durée de l'ordre de quelques heures, à des températures de l'ordre de 100°C.

Il est généralement utilisé dans une proportion de 0,1à 5 % en poids du poids total de la composition.

Lorsque le constituant D est un chélate d'aluminium, la composition comporte de préférence un constituant E qui est un solvant organique dont le point d'ébullition T, à pression atmosphérique, est compris entre 70 et 140°C.

Le constituant E, utilisé préférentiellement lorsque le constituant D est un chélate d'aluminium, peut éventuellement être utilisé lorsque le constituant D est choisi parmi les composés de l'aluminium de formule (III) ou (IV).

Comme constituant E, on peut utiliser l'éthanol, l'isopropanol, l'acétate d'éthyle, la méthyléthylcétone, le tétrahydropyrane.

Les compositions selon l'invention peuvent également renfermer d'autres solvants organiques (outre le constituant E), de préférence alcooliques, tels que le méthanol, qui servent à ajuster la viscosité des compositions.

On utilise préférentiellement les proportions en poids suivantes pour les différents constituants de la composition :
- de 130 à 230 parties du constituant A
- de 20 à 150 parties du constituant B
- de 30 à 800 parties du constituant C, préférentiellement de 200 à 800
- de 5 à 20 parties du constituant D
- de 20 à 50 parties du constituant E, lorsque le constituant E est présent.

En outre, et d'une manière générale, on préfère les compositions dont l'extrait sec théorique renferme de 5 à 20 % en poids de matières solides provenant du constituant B, préférentiellement de 8 à 16 % en poids, le domaine optimal variant de 10 à 15 % en poids.

Les compositions de l'invention donnant les meilleures propriétés renferment au moins 40 % de matière solide (SiO₂) provenant du constituant C dans l'extrait sec théorique, de préférence de l'ordre de 50 %.

Par poids en matières solides provenant des constituants A ou B, on entend le poids calculé en unité Qₖ Si O_{(4-k)/2} dans lesquelles Q est un groupement organique directement lié à l'atome de silicium par une liaison Si-C et Qₖ SiO_{(4-k)/2} provient de Qₖ Si R'''₍₄₋ₖ₎ ou Si-R''' engendre SiOH par traitement hydrolytique, et k désigne 0, 1 ou 2.

Par poids en matières solides provenant du constituant C, on entend le poids en SiO₂.

Le poids en extrait sec théorique (EST) est le poids total calculé de matières solides provenant des constituants A, B et C, additionné du poids du constituant D.

Les compositions selon l'invention comprennent de préférence au moins 1 % en poids d'eau.

Cette eau peut provenir d'une hydrolyse incomplète des silanes de départ ou de la réaction de condensation des silanols formés au cours de cette hydrolyse.

L'eau peut encore être ajoutée aux compositions, soit directement, soit par l'intermédiaire de solvants organiques qui contiennent eux-mêmes un certain pourcentage d'eau.

Les compositions peuvent aussi inclure divers additifs tels que des agents tensio-actifs favorisant un meilleur étalement de la composition sur la surface à revêtir, des absorbeurs UV ou des pigments.

Les articles revêtus selon l'invention sont des articles en matériau organique, plus particulièrement ceux utilisés dans le domaine ophtalmique et spécialement en matériau organique obtenu par polymérisation du di(allylcarbonate) de diéthylène glycol ou du di(allyl carbonate) de bis phénol A.

En ce qui concerne la mise en oeuvre, les compositions peuvent être appliquées par toute technique appropriée connue en soi : trempé, centrifugation, notamment.

Elles sont ensuite durcies thermiquement dans une gamme de température variant de 60°C à 200°C.

Les épaisseurs des revêtements durcis varient généralement de 1 à 20 µ, préférentiellement de 1 à 5 µ.

Après durcissement de la composition, un revêtement anti-reflets peut être formé en surface du revêtement anti-abrasion.

Un revêtement anti-reflets est constitué d'un film mono ou multicouche, de matériaux diélectriques, tels que SiO, SiO₂, Si₃N₄, TiO₂, ZrO₂, Al₂O₃ ou MgF₂ ou des mélanges de ceux-ci, par dépôt sous vide ou par pulvérisation ionique, et il devient ainsi possible d'empêcher l'apparition d'une réflexion à l'interface lentille-air. Dans le cas où la pellicule comprend une seule couche, son épaisseur optique doit être égale à λ/4 où λ est une longueur d'onde comprise entre 450 et 650 nm.
Dans le cas d'un film multicouche comportant 3 couches, on peut utiliser une combinaison correspondant à des épaisseurs optiques respectives λ/4 - λ/2 - λ/4, ou λ/4 - λ/4 - λ/4.

On peut en outre utiliser un film équivalent formé par plus de deux couches, à la place de l'une quelconque des couches faisant partie des trois couches précitées.

Un des objets de l'invention est donc constitué d'un article en matériau organique, porteur d'un revêtement anti-abrasion tel que décrit précédemment, lui-même revêtu d'au moins une couche anti-reflets.

Les exemples suivants illustrent l'invention de façon plus détaillée mais non limitative.

Pour l'appréciation des propriétés des verres revêtus obtenus dans les exemples on a mesuré :
- la résistance à l'abrasion, par la valeur obtenue au test BAYER pratiqué conformément à la norme ASTM F735.81.
   Une valeur élevée au test BAYER correspond à un degré élevé de résistance à l'abrasion.
- La résistance à la rayure par le test à la laine d'acier.
   On utilise de la laine d'acier extra fine n° 000 STARWAX.
   Avec un morceau de laine d'acier d'environ 3 cm sur 3 cm plié sur lui-même, on effectue 10 aller-retours en frottant le verre revêtu dans le sens des fibres avec une pression constante lors de cette opération.
   Le verre est ensuite essuyé avec un chiffon sec, puis rincé à l'alcool.
   On apprécie ensuite visuellement l'état du verre et l'on attribue une notation en fonction de la graduation suivante :
   0 aucune rayure observée
   1 verre très peu rayé (0 à 5 rayures)
   2 verre peu rayé (jusqu'à 20 rayures)
   3 verre assez rayé (jusqu'à 50 rayures)
   4 verre très rayé (nombre de rayures supérieur à 50)
   5 substrat nu (ORMA®).
- la résistance aux chocs par le test de la chute de bille.
   On fait tomber des billes avec une énergie croissante au centre du verre revêtu jusqu'à l'étoilement ou la cassure de celui-ci.
   On calcule ensuite l'énergie moyenne de rupture du verre revêtu.
- l'aspect du verre revêtu, effectué par contrôle visuel.
   Le classement est le suivant :
   bien pour un verre transparent sans aucune imperfection acceptable pour un verre très légèrement diffusant non satisfaisant pour un verre diffusant ou présentant des imperfections de surface.
- l'adhérence du revêtement :
   Un test d'adhérence est effectué suivant la norme AFNOR 76 FNT 30-038, qui conduit à un classement de 0 à 5 degrés.
   Il consiste à entailler le revêtement à l'aide d'un cutter, suivant un réseau quadrillé de lignes d'incision, à appliquer un ruban adhésif au revêtement ainsi quadrillé et à essayer de l'arracher à l'aide de celui-ci.
   Les résultats sont considérés comme bons au degré zéro c'est-à-dire que les bords des incisions pratiquées demeurent parfaitement lisses, et aucun des carrés qu'elles délimitent ne se détache, et ceci même après que la lentille revêtue ait été plongée dans un bain d'eau bouillante pendant 30 minutes.

Les proportions, pourcentages et quantités mentionnés dans les exemples sont des proportions, pourcentages et quantités en poids sauf précision contraire.
Le γ - glycidoxypropyltriméthoxysilane est désigné par GLYMO.
Le diméthyldiéthoxysilane est désigné par DMDES.
EST signifie extrait sec théorique.
Les épaisseurs des revêtements polysiloxanes durcis, dans les exemples, sont compris entre 2 et 5 µm.

### EXEMPLE 1

On fait tomber goutte à goutte 40,85 parties d'acide chlorhydrique 0,1 N dans une solution qui contient 152,6 parties de GLYMO et 24,5 parties de DMDES.

La solution hydrolysée est agitée 24 heures à température ambiante puis on ajoute 400 parties de silice colloïdale à 30 % dans le méthanol, 150 parties de méthanol, 10 parties d'acétylacétonate d'aluminium et 29,8 parties d'éthylcellosolve.

On ajoute à la composition une petite quantité d'agent tensio-actif, améliorant la capacité d'étalement de cette composition.

L'extrait sec théorique de la composition (EST) renferme de l'ordre de 5 % en matière solide provenant du DMDES hydrolysé.

Des lentilles ophtalmiques ORMA® en verre organique constitué d'un polymère de di(allylcarbonate) de diéthylène glycol, d'une épaisseur au centre de 2 mm sont revêtues par dip coating, puis soumises à une précuisson de 15 minutes à 60°C. Elles sont ensuite passées à l'étuve à 100°C pendant 3 heures.

### EXEMPLE 2

On fait tomber goutte à goutte 42,9 parties d'acide chlorhydrique 0,1 N dans une solution contenant 135,7 parties de GLYMO et 49 parties de DMDES.

La solution hydrolysée est agitée 24 heures à température ambiante puis on ajoute 8,8 parties d'acétylacétonate d'aluminium, 26,5 parties d'éthylcellosolve, 400 parties de silice colloïdale à 30 % dans le méthanol et 157 parties de méthanol.

On ajoute une petite quantité d'agent tensio-actif.

L'EST de la composition renferme de l'ordre de 10 % en matière solide provenant du DMDES hydrolysé.

La composition est appliquée sur une lentille ORMA®, d'épaisseur au centre de 2 mm puis traitée de la même façon que dans l'exemple 1.

### EXEMPLE 3

On fait tomber goutte à goutte 80,5 parties d'acide chlorhydrique 0,1 N dans une solution contenant 224 parties de GLYMO et 120 parties de DMDES.

La solution hydrolysée est agitée 24 heures à température ambiante puis on ajoute 718 parties de silice colloïdale à 30 % dans le méthanol, 15 parties d'acétylacétonate d'aluminium et 44 parties d'éthylcellosolve.

On ajoute une petite quantité d'agent tensio-actif.

L'EST de la composition renferme de l'ordre de 13 % en matière solide provenant du DMDES hydrolysé.

La composition est appliquée sur une lentille ORMA® d'épaisseur au centre de 2 mm puis traitée de la même façon que dans l'exemple 1.

### EXEMPLE 4

On opère conformément à l'exemple 2, mais en utilisant 100 g de GLYMO et 96 g de DMDES.

L'EST de la composition renferme de l'ordre de 20 % en matière solide provenant du DMDES hydrolysé.

### EXEMPLE 5 (comparatif)

On fait tomber goutte à goutte 39 parties d'acide chlorhydrique 0,1 N dans 170 parties de GLYMO.

La solution hydrolysée est agitée 24 heures à température ambiante puis on ajoute 400 parties de silice colloïdale à 30 % dans le méthanol, 11 parties d'acétylacétonate d'aluminium, 33 parties d'éthylcellosolve et 147 parties de méthanol.

Les lentilles revêtues des exemples 1 à 5 sont testées et les résultats sont rassemblés dans le tableau I.

En réf, on a indiqué les résultats donnés par une lentile ORMA® non revêtue.

**TABLEAU I**

| | Ex 1 | Ex 2 | Ex 3 | Ex 4 | Ex 5 | Ref. |
|---|---|---|---|---|---|---|
| Laine d'acier | 0-0.5 | 0 | 0 | 0.5-1 | 0 | 5 |
| Test chute de bille (E rupture en mJ) | 500 | 569 | 687 | 559 | 383 | - |
| Aspect | bien | bien | bien | acceptable | bien | bien |
| Adhérence | bonne | | | | | |

### EXEMPLES 6 à 9

Chacune des lentilles revêtues obtenues dans les exemples 1 à 4 est traitée anti-reflets.

Les compositions de revêtement des exemples 6 à 9 correspondent respectivement à celles des exemples 1 à 4.

Les lentilles sont traitées anti-reflets par déposition sous vide par la technique d'évaporation d'un film multicouche à base d'oxyde de titane et de silicium d'une épaisseur globale de l'ordre de 250 nm.

Les lentilles traitées anti-reflets sont testées et les résultats sont rassemblés dans le tableau II.

**TABLEAU II**

| | Ex 6 | Ex 7 | Ex 8 | Ex 9 |
|---|---|---|---|---|
| composition correspondant à l'exemple n° | 1 | 2 | 3 | 4 |
| Laine d'acier | 0.5-1 | 0.5-1 | 0.5-1 | 0.5-1.5 |
| BAYER | 2,3 | 2,9 | 3,3 | 2,5 |
| Aspect | bien | bien | bien | acceptable |
| Adhérence | bonne | | | |

### EXEMPLE 10

On fait tomber goutte à goutte 117,6 parties d'acide chlorhydrique 0,1 N dans un mélange de 330,4 parties de GLYMO et 172,8 parties de DMDES.

La solution hydrolysée est agitée pendant 24 heures à température ambiante, puis on ajoute 1066,7 parties de silice colloïdale à 30 % dans le méthanol et 100 parties de méthyléthylcétone.

On ajoute une petite quantité d'agent tensio-actif (1,6 partie en poids).

La composition obtenue est divisée en deux fractions égales : fraction 1 et fraction 2.

La fraction 2 sera utilisée dans l'exemple 11.

On ajoute à la fraction 1, 10,74 parties d'acétylacétonate d'aluminium. La composition est ensuite filtrée puis appliquée sur une lentille ORMA®, d'épaisseur au centre de 2 mm puis traitée de la même façon qu'à l'exemple 1.

L'énergie de rupture d'une lentille ainsi revêtue est de 540 mJ.

### EXEMPLE 11

On dissout 3,38 parties d'Al(OiPr)₃ dans 20 parties de toluène puis on ajoute une partie d'acide acétique en produisant in situ

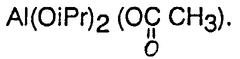

Le mélange est ajouté à la fraction 2 de l'exemple 10.

La composition ainsi obtenue est appliquée sur une lentille ORMA®, d'épaisseur au centre de 2 mm puis traitée de la même façon qu'à l'exemple 1.

L'énergie de rupture d'une lentille ainsi revêtue est de 651 mJ.

## Revendications

1. Composition durcissable pour revêtement anti-abrasion comprenant les constituants suivants :
A - Un hydrolysat d'un silane comportant un groupement époxy et trois groupements alkoxy, ces derniers étant directement liés à l'atome de silicium,
B - Un hydrolysat d'un silane de formule (I) 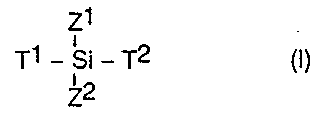 dans laquelle T¹ et T² sont des groupements qui, par traitement hydrolytique du silane de formule (I), conduisent chacun à un groupement OH,
Z¹ et Z² sont des groupements organiques liés à l'atome de silicium par une liaison Si-C et qui ne comportent pas de groupements susceptibles de réagir sur les silanes hydrolysés présents dans la composition,
C - De la silice colloïdale,
D - Un composé de l'aluminium choisi parmi
- les chélates d'aluminium
- les composés de formule (III) ou (IV) 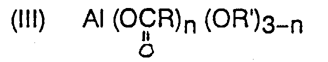
(IV) (R'O)₃₋ₙ Al (O Si R''₃)ₙ
dans lesquelles
R et R' sont des groupements alkyles à chaine linéaire ou ramifiée de 1 à 10 atomes de carbone,
R'' est un groupement alkyle à chaine linéaire ou ramifiée de 1 à
10 atomes de carbone, un groupement phényle, un groupement 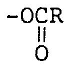 où R à la signification indiquée ci-dessus,
et n est un nombre entier de 1 à 3.

2. Composition selon la revendication 1 caractérisée en ce qu'elle comprend en outre, lorsque le composé de l'aluminium est un chélate d'aluminium, E) un solvant organique dont le point d'ébullition T à pression atmosphérique, est compris entre 70°C et 140°C.

3. Composition selon la revendication 1 ou 2, caractérisée en ce que le silane à groupement époxy a pour formule (V) 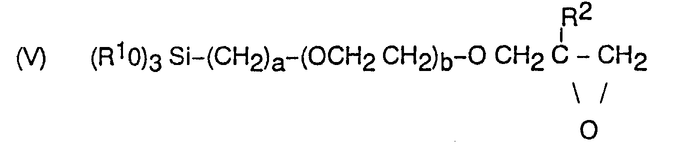 dans laquelle
R¹ est un groupement alkyle de 1 à 6 atomes de carbone, préférentiellement un groupement méthyle ou éthyle,
R² est un groupement méthyle ou un atome d'hydrogène,
a est un nombre entier de 1 à 6,
b représente 0,1 ou 2.

4. Composition selon la revendication 3, caractérisée en ce que le silane de formule (V) est le γ -glycidoxypropyltriméthoxysilane.

5. Composition selon l'une quelconque des revendications précédentes, caractérisée en ce que, dans la formule (I) du constituant B,
T¹ et T² sont des groupements alkoxy de 1 à 10 atomes de carbone,
Z¹ et Z² sont choisis parmi les groupements alkyles de 1 à 10 atomes de carbone et les groupements aryles de 6 à 10 atomes de carbone tels que le groupement phényle.

6. Composition selon la revendication 5, caractérisée en ce que le silane de formule (I) est choisi parmi le diméthyldiméthoxysilane, le diméthyldiéthoxysilane, le méthylphényldiméthoxysilane.

7. Composition selon l'une quelconque des revendications précédentes, caractérisée en ce qu'elle comporte en outre un solvant alcoolique.

8. Composition selon l'une quelconque des revendications précédentes, caractérisée en ce que les proportions en poids des différents constituants A, B, C, D et E présents dans cette composition sont :
- de 130 à 230 parties de constituant A
- de 20 à 150 parties de constituant B
- de 200 à 800 parties de constituant C
- de 5 à 20 parties de constituant D
- optionnellement, de 20 à 50 parties de E

9. Composition selon l'une quelconque des revendications précédentes, caractérisée en ce qu'elle renferme au moins 1 % en poids d'eau.

10. Composition selon l'une quelconque des revendications précédentes, caractérisée en ce que l'extrait sec théorique de cette composition renferme de 5 à 20 % en poids de matière solide provenant du constituant B.

11. Composition selon la revendication 10, caractérisée en ce que ledit extrait sec théorique renferme de 8 à 16 % en poids de matière solide provenant du constituant B.

12. Composition selon la revendication 11, caractérisée en ce que ledit extrait sec théorique renferme de 10 à 15 % en poids de matière solide provenant du constituant B.

13. Article en matériau organique porteur d'un revêtement anti-abrasion obtenu par durcissement d'une composition selon l'une quelconque des revendications précédentes.

14. Article revêtu selon la revendication 13, caractérisé en ce que ledit article comprend un polymère de di(allylcarbonate) de diéthylène glycol.

15. Article revêtu selon la revendication 13 ou 14, caractérisé en ce qu'il se présente sous la forme d'une lentille ophtalmique.

16. Article revêtu selon la revendication 15, caractérisé en ce qu'il comporte, à la surface de son revêtement anti-abrasion au moins un revêtement anti-reflets.

17. Article revêtu selon la revendication 16, caractérisé en ce que le revêtement anti-reflets est constitué d'un film mono ou multicouche d'oxydes métalliques.

## Patentansprüche

1. Härtbare Zusammensetzung für eine abriebfeste Beschichtung, umfassend die folgenden Bestandteile:
A - ein Hydrolysat eines Silans, enthaltend eine Epoxygruppe und drei Alkoxygruppen, wobei die letzteren direkt an das Siliziumatom gebunden sind;
B - ein Hydrolysat eines Silans der Formel (I) 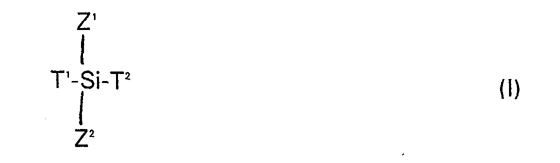 worin T¹ und T² Gruppen sind, welche durch hydrolytische Behandlung des Silans der Formel (I) jeweils zu einer OH-Gruppe führen,
Z¹ und Z² durch eine Si-C-Bindung an das Siliziumatom gebundene, organische Gruppen sind, welche keine Gruppen enthalten, welche imstande sind, mit den in der Zusammensetzung enthaltenen, hydrolysierten Silanen zu reagieren;
C - kolloidales Siliziumdioxid;
D - eine Aluminiumverbindung, gewählt aus
- den Aluminiumchelaten
- den Verbindungen der Formeln (III) oder (IV) 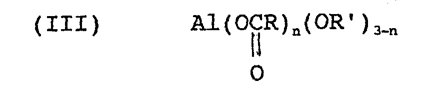
(IV) (R'O)₃₋ₙAl(O Si R"₃)ₙ
in welchen R und R' geradkettige oder verzweigte Alkylgruppen mit 1 bis 10 Kohlenstoffatomen sind,
R" eine geradkettige oder verzweigte Alkylgruppe mit 1 bis 10 Kohlenstoffatomen, eine Phenylgruppe, eine 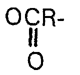 Gruppe, in welcher R die ober angegebene Bedeutung besitzt, ist und
n eine ganze Zahl von 1 bis 3 ist.

2. Zusammensetzung nach Anspruch 1, dadurch gekennzeichnet, daß sie außerdem, wenn die Aluminiumverbindung ein Aluminiumchelat ist,
E- ein organisches Lösungsmittel enthält, dessen Siedepunkt T bei Atmosphärendruck zwischen 70 °C und 140 °C liegt.

3. Zusammensetzung nach Anspruch 1 oder 2, dadurch gekennzeichnet, daß das Silan mit einer Epoxygruppe die Formel (V) 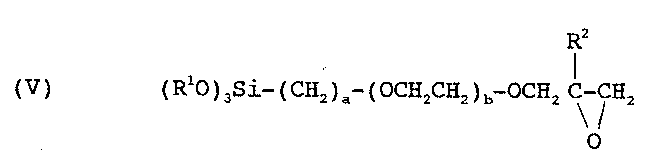 aufweist, in welcher
R¹ eine Alkylgruppe mit 1 bis 6 Kohlenstoffatomen, vorzugsweise eine Methyl- oder Ethylgruppe ist,
R² eine Methylgruppe oder ein Wasserstoffatom ist,
a eine ganze Zahl von 1 bis 6 ist,
b 0, 1 oder 2 bedeutet.

4. Zusammensetzung nach Anspruch 3, dadurch gekennzeichnet, daß das Silan der Formel (V) das y-Glycidoxypropyltrimethoxysilan ist.

5. Zusammensetzung nach einem der vorhergehenden Ansprüche dadurch gekennzeichnet, daß in der Formel (I) des Bestandteils B, T¹ und T² Alkoxygruppen mit 1 bis 10 Kohlenstoffatomen sind, Z¹ und Z² aus den Alkylgruppen mit 1 bis 10 Kohlenstoffatomen und den Arylgruppen mit 6 bis 10 Kohlenstoffatomen, wie die Phenylgruppe, gewählt sind.

6. Zusammensetzung nach Anspruch 5, dadurch gekennzeichnet, daß das Silan der Formel (I) aus Dimethyldimethoxysilan, Dimethyldiethoxysilan, Methylphenyldimethoxysilan gewählt ist.

7. Zusammensetzung nach einem der vorhergehenden Ansprüche, dadurch gekennzeichnet, daß sie außerdem ein alkoholisches Lösungsmittel enthält.

8. Zusammensetzung nach einem der vorhergehenden Ansprüche, dadurch gekennzeichnet, daß die Gewichtsverhältnisse der verschiedenen in dieser Zusammensetzung vorhandenen Bestandteile A, B, C, D und E sind:
- 130 bis 230 Teile des Bestandteiles A
- 20 bis 150 Teile des Bestandteiles B
- 200 bis 800 Teile des Bestandteiles C
- 5 bis 20 Teile des Bestandteiles D
- gegebenenfalls 20 bis 50 Teile von E.

9. Zusammensetzung nach einem der vorhergehenden Ansprüche, dadurch gekennzeichnet, daß sie wenigstens 1 Gew.-% Wasser enthält.

10. Zusammensetzung nach einem der vorhergehenden Ansprüche, dadurch gekennzeichnet, daß der theoretische Trockenextrakt dieser Zusammensetzung 5 bis 20 Gew.-% von Bestandteil B stammende Feststoffe aufweist.

11. Zusammensetzung nach Anspruch 10, dadurch gekennzeichnet, daß der theoretische Trockenextrakt dieser Zusammensetzung 8 bis 16 Gew.-% von Bestandteil B stammende Feststoffe aufweist.

12. Zusammensetzung nach Anspruch 11, dadurch gekennzeichnet, daß der theoretische Trockenextrakt dieser Zusammensetzung 10 bis 15 Gew.-% von Bestandteil B stammende Feststoffe aufweist.

13. Gegenstand aus organischem Material, welcher eine durch Härtung einer Zusammensetzung gemäß einem der vorhergehenden Ansprüche erhaltene, abriebfeste Beschichtung trägt.

14. Beschichteter Gegenstand nach Anspruch 13, dadurch gekennzeichnet, daß der Gegenstand ein Polymer des Di(allylcarbonats) des Diethylenglykols umfaßt.

15. Beschichteter Gegenstand nach Anspruch 13 oder 14, dadurch gekennzeichnet, daß er in Form einer ophthalmischen Linse vorliegt.

16. Beschichteter Gegenstand nach Anspruch 15, dadurch gekennzeichnet, daß er auf der Oberfläche seiner abriebfesten Beschichtung wenigstens eine Antireflexbeschichtung aufweist.

17. Beschichteter Gegenstand nach Anspruch 16, dadurch gekennzeichnet, daß die Antireflexbeschichtung aus einem ein- oder mehrschichtigen Metalloxidfilm besteht.

## Claims

1. Hardenable composition for an abrasion resistant coating comprising the following constituents:
A - a silane hydrolysate containing an- epoxy group and three alkoxy groups, the latter groups being directly bonded to the silicon atom,
B - a silane hydrolysate having formula (I): 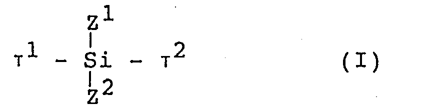 where T¹ and T² are groups which will each react to give a OH group on hydrolysis of the silane of formula (I),
Z¹ and Z² are organic groups bonded to the silicon atom by a Si-C bond which do not contain a group capable of reacting with the hydrolysed silanes present in the composition,
C - colloidal silica,
D - an aluminium compound selected from:
- aluminium chelates,
- compounds having formula (III) or (IV) 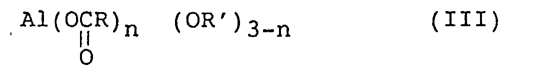
(R'O)₃₋ₙAl(OSiR"₃)ₙ (IV)
wherein:
R and R' are linear or branched alkyl groups with 1 to 10 carbon atoms,
R" is a linear or branched alkyl group with 1 to 10 carbon atoms, a phenyl group, a 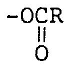 group where R has the meaning given above, and n is a whole number from 1 to 3.

2. Composition according to claim 1 characterised in that it further comprises, when the aluminium compound is an aluminium chelate:
E - an organic solvent whose boiling point T at atmospheric pressure is between 70°C and 140°C.

3. Composition according to claim 1 or claim 2 characterised in that the silane containing an epoxy group has the following formula (V) 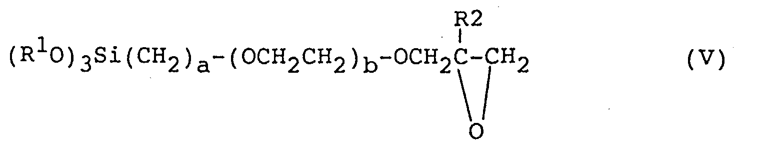 wherein:
R¹ is an alkyl group with 1 to 6 carbon atoms, preferably a methyl or ethyl group,
R² is a methyl group or hydrogen atom,
a is a whole number from 1 to 6,
b is 0, 1 or 2.

4. Composition according to claim 3 characterised in that the silane having formula (V) is γ-glycidoxypropyltrimethoxysilane.

5. Composition according to any one of the preceding claims characterised in that in formula (I) of constituent B:
T¹ and T² are alkoxy groups with 1 to 10 carbon atoms, and
Z¹ and Z² are selected from alkyl groups with 1 to 10 carbon atoms and aryl groups with 1 to 10 carbon atoms, such as the phenyl group.

6. Composition according to claim 5 characterised in that the silane of formula (I) is selected from dimethyldimethoxysilane, dimethyldiethoxysilane and methylphenyldimethoxysilane.

7. Composition according to any one of the preceding claims characterised in that it further comprises an alcohol type solvent.

8. Composition according to any one of the preceding claims characterised in that the following proportions by weight are employed for the constituents A, B, C, D and E in the composition:
- 130 to 230 parts of constituent A,
- 20 to 150 parts of constituent B,
- 200 to 800 parts of constituent C,
- 5 to 20 parts of constituent D,
- optionally, 20 to 50 parts of constituent E,

9. Composition according to any one of the preceding claims characterised in that it contains at least 1% by weight of water.

10. Composition according to any one of the preceding claims characterised in that the theoretical dry content of the composition is 5% to 20% by weight of solid material from constituent B.

11. Composition according to claim 10 characterised in that said theoretical dry content is 8% to 16% by weight of solid material from constituent B.

12. Composition according to claim 11 characterised in that said theoretical dry content is 10% to 15% by weight of solid material from constituent B.

13. Organic material article bearing an abrasion resistant coating produced by hardening a composition according to any one of the preceding claims.

14. Coated article according to claim 13 characterised in that said article comprises a diethylene glycol di(allylcarbonate) polymer.

15. Coated article according to claim 13 or claim 14 characterised in that it is in the form of an ophthalmic lens.

16. Coated article according to claim 15 characterised in that it comprises at least one nonreflective coating on the surface of the abrasion resistant coating.

17. Coated article according to claim 16 characterised in that the nonreflective coating is constituted by a mono- or multilayer film of metallic oxides.
